# EUROPÄISCHE PATENTANMELDUNG

(11) **EP 1 431 081 A1**
(43) Veröffentlichungstag der Anmeldung: **23.06.2004**
(21) Anmeldenummer: 03028708.0
(22) Anmeldetag: 12.12.2003
(51) Int. Cl.: B60D 1/62

(54) **Vorrichtung zur Verbindung eines Kraftfahrzeuganhängers mit einem Kraftfahrzeug**

(30) Priorität: 16.12.2002 DE 10258795
(71) Anmelder: Delphi Technologies, Inc., Troy, MI 48007 (US)
(72) Erfinder: Giesen, Marko, 51588 Nümbrecht (DE); Trommer, Frank O., 51588 Nümbrecht (DE); Lehmann, Klaus, 53797 Lohmar (DE); Stadler, Peter, 57482 Wenden (DE); Schulte, Thomas, 58540 Meinerzhagen Windebruch (DE)
(74) Vertreter: Manitz, Finsterwald & Partner GbR

(57) **Zusammenfassung**

Die Erfindung betrifft eine Vorrichtung zur Verbindung eines Kraftfahrzeuganhängers mit einem Kraftfahrzeug umfassend eine Anhängerkupplung sowie eine elektrische Verbindung zwischen Kraftfahrzeug und Anhänger zur Versorgung mindestens eines Stromverbrauchers des Anhängers mit Strom, wobei die elektrische Verbindung zwischen Kraftfahrzeug und Anhänger in die Anhängerkupplung integriert ist und keine eigene elektrische Steckverbindung aufweist.

## Beschreibung

Die vorliegende Erfindung betrifft eine Vorrichtung zur Verbindung eines Kraftfahrzeuganhängers mit einem Kraftfahrzeug, umfassend eine Anhängerkupplung sowie eine elektrische Verbindung zwischen Kraftfahrzeug und Anhänger zur Versorgung mindestens eines Stromverbrauchers des Anhängers mit Strom.

Eine solche Verbindungsvorrichtung ist grundsätzlich bekannt. So wird ein Kraftfahrzeuganhänger üblicherweise mittels einer Anhängerkupplung mit einem Kraftfahrzeug verbunden, wobei die Versorgung der Stromverbraucher im Anhänger, wie beispielsweise Rücklicht oder Blinker, durch eine von der Anhängerkupplung getrennte Stromversorgung in Form eines separaten Kabels erfolgt. Die elektrische Verbindung zwischen Kraftfahrzeug und Kraftfahrzeuganhänger wird dadurch erreicht, dass ein am Kraftfahrzeuganhänger angebrachtes Steckelement mit einem am Kraftfahrzeug angebrachten Gegensteckelement verbunden wird. Da eine Vielzahl von verschiedenen Steckelementen und Gegensteckelementen dem Anwender zur Verfügung steht, ist eine Kompatibilität zwischen dem Steckelement des Kraftfahrzeuganhängers und dem Gegensteckelement des Kraftfahrzeugs nicht immer gegeben.

Es ist die Aufgabe der vorliegenden Erfindung, eine Vorrichtung der eingangs genannten Art zu schaffen, bei der das Problem der nicht immer gegebenen Kompatibilität zwischen Steckelement und Gegensteckelement beseitigt ist und bei der der Kraftfahrzeuganhänger einfach und schnell mit dem Kraftfahrzeug verbunden werden kann.

Die Lösung dieser Aufgabe erfolgt durch die Merkmale des Anspruchs 1 und insbesondere dadurch, dass die elektrische Verbindung zwischen Kraftfahrzeug und Anhänger in die Anhängerkupplung integriert ist und keine eigene elektrische Steckverbindung aufweist. Hierdurch wird erreicht, dass eine von der Anhängerkupplung getrennte Stromversorgung in Form eines separaten Kabels nicht mehr notwendig ist, wodurch das Verbinden von Kraftfahrzeuganhänger und Kraftfahrzeug deutlich einfacher und schneller realisiert werden kann. Da erfindungsgemäß keine Steckverbindung zur elektrischen Verbindung von Kraftfahrzeuganhänger und Kraftfahrzeug mehr notwendig ist, besteht kein Problem hinsichtlich der Kompatibilität von Steckelement und Gegensteckelement des Kraftfahrzeuganhängers bzw. des Kraftfahrzeuges.

Vorteilhafte Ausführungsformen der Erfindung sind in der Beschreibung, den Figuren sowie den Unteransprüchen beschrieben.

Gemäß einer ersten vorteilhaften Ausführungsform kann die Anhängerkupplung einen Zughaken in Form eines Kugelkopfhakens und/oder Kugelkopfpassstücks umfassen. Die elektrische Verbindung zwischen Kraftfahrzeug und Kraftfahrzeuganhänger kann dabei beispielsweise mittels Schleifkontakt zwischen den Leitungsendabschnitten der elektrischen Leitung des Kraftfahrzeugs und des Anhängers in der Anhängerkupplung erfolgen. Es kann vorteilhaft sein, die elektrischen Kontaktflächen der Leitungsendabschnitte nicht punktförmig, sondern im Wesentlichen flächig auf den sich in der Anhängerkupplung berührenden Flächen des Kugelkopfhakens und des Kugelkopfpassstückes auszubilden, so dass auch beim Fahren, wenn sich die Anhängerkupplungsteile des Kraftfahrzeugs und des Kraftfahrzeuganhängers gegeneinander bewegen, eine elektrische Verbindung zwischen Kraftfahrzeug und Kraftfahrzeuganhänger sichergestellt ist.

Bei einer weiteren vorteilhaften Ausführungsform können Mittel zur drahtlosen Übertragung von Steuersignalen für den mindestens einen Stromverbraucher des Anhängers vorgesehen sein. Da nicht mehr notwendigerweise alle Steuerbefehle zwischen Kraftfahrzeug und Kraftfahrzeuganhänger durch die elektrische Verbindung in der Anhängerkupplung geschickt werden müssen, kann dadurch die Verkabelung sowohl im Kraftfahrzeug als auch im Kraftfahrzeuganhänger optimiert werden.

Bei einer weiteren Ausführungsform können/ kann im Kraftfahrzeug eine Sendeschaltung und/oder im Anhänger eine Empfangsschaltung zur drahtlosen Übertragung von Steuersignalen für den mindestens einen Stromverbraucher des Anhängers vorgesehen sein. Bei dieser Ausführungsform werden Steuerbefehle, wie beispielsweise das Aktivieren eines Bremslichtes, vom Kraftfahrzeug an den Kraftfahrzeuganhänger gesendet. Für den Fall, dass beispielsweise Kontrollfunktionen für den mindestens einen Verbraucher im Anhänger vorgesehen sein sollen, können/kann gemäß einer alternativen Ausführungsform im Kraftfahrzeug eine Sende-/Empfangsschaltung und/oder im Anhänger eine Sende-/Empfangsschaltung zur drahtlosen Übertragung von Steuersignalen für den mindestens einen Stromverbraucher des Anhängers vorgesehen sein. Bei dieser Ausführungsform können sowohl Signale vom Kraftfahrzeug zum Kraftfahrzeuganhänger wie auch in umgekehrter Richtung übertragen werden, beispielsweise um an das Kraftfahrzeug Rückmeldesignale zu übertragen, die einen Ausfall von Verbrauchern signalisieren.

Bei einer weiteren vorteilhaften Ausführungsform kann eine elektronische Steuereinheit in Abhängigkeit von Empfangsschaltungssignalen im Anhänger vorgesehen sein. Die Steuereinheit kann dazu dienen, die von der Empfangschaltung erhaltenen Signale über ein Schaltelement an den entsprechenden Verbraucher zu leiten.

Weiterhin kann eine elektronische Steuereinheit zur Steuerung des mindestens einen Stromverbrauchers vorgesehen sein, die die Funktion einer elektrischen Sicherung aufweist, so dass keine zusätzliche Sicherung mehr im Kraftfahrzeuganhänger benötigt wird.

Nachfolgend wird die vorliegende Erfindung rein beispielhaft anhand einer vorteilhaften Ausführungsform unter Bezugnahme auf die beigefügte Zeichnung beschrieben. In dieser zeigt:

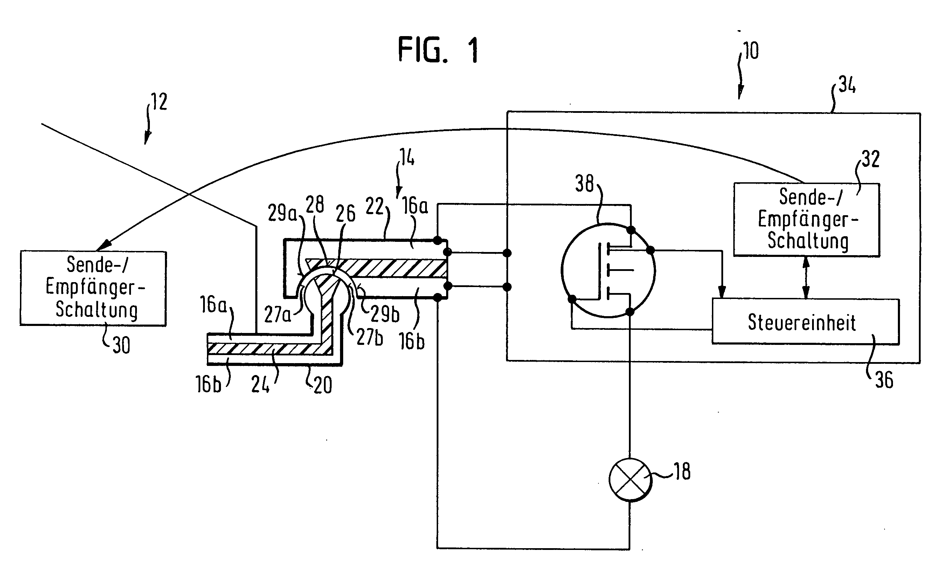

- Fig. 1: eine schematische Darstellung einer Vorrichtung zur Verbindung eines Kraftfahrzeuganhängers mit einem Kraftfahrzeug.

Fig. 1 zeigt eine Ausführungsform einer Vorrichtung zur Verbindung eines Kraftfahrzeuganhängers 10 mit einem Kraftfahrzeug 12, wobei die Vorrichtung eine Anhängerkupplung 14 mit elektrischen Leitungsabschnitten 16a, 16b zur Versorgung mindestens einer Lampe 18 im Anhänger 10 umfasst. Die Anhängerkupplung 14 umfasst einen am Kraftfahrzeug 12 befestigten Zughaken in Form eines Kugelkopfhakens 20, sowie ein am Anhänger 10 befestigtes Kugelkopfpassstück 22. Der Kugelkopfhaken 20 bildet eine Kugelkopffläche 26 aus, über die eine vom Kugelkopfpassstück 22 ausgebildete Kugelkopfpassstückfläche 28 gleiten kann.

Sowohl im Kugelkopfhaken 20 als auch im Kugelkopfpassstück 22 befinden sich die elektrischen Leitungsabschnitte 16a, 16b, die durch eine elektrische Isolierung 24 voneinander getrennt sind. Die elektrischen Leitungsabschnitte 16a, 16b enden im Kugelkopfhaken 20 senkrecht zur Kugelkopffläche 26 bzw. im Kugelkopfpassstück 22 senkrecht zur Kugelkopfpassstückfläche 28. Die Leitungsendabschnitte der Leitungsabschnitte 16a, 16b bilden auf der Kugelkopffläche 26 und auf der Kugelkopfpassstückfläche 28 elektrische Kontakte 27a, 27b bzw. 29a, 29b aus, von denen der elektrische Kontakt 27a auf der Kugelkopffläche 26 in elektrisch leitender Verbindung mit dem elektrische Kontakt 29a auf der Kugelkopfpassstückfläche steht und der elektrische Kontakt 27b auf der Kugelkopffläche 26 mit dem elektrische Kontakt 29b auf der Kugelkopfpassstückfläche leitend verbunden ist. Die elektrischen Kontakte 27a, 27b bzw. 29a, 29b bedecken zwei Drittel der halbkugelförmigen Fläche des Kugelkopfhakens 20 bzw. des Kugelkopfpassstücks 22 und sind durch die elektrische Isolierung 24 voneinander getrennt, die auf der halbkugelförmigen Fläche des Kugelkopfhakens 20 bzw. des Kugelkopfpassstücks 22 ein Drittel der Fläche einnimmt. Somit können, beispielsweise beim Fahren des Kraftfahrzeugs 12 über unebenes Gelände, Kugelkopfhaken und Kugelkopfpassstück gegeneinander gleiten, ohne dass beispielsweise der elektrische Kontakt 27a auf der Kugelkopffläche 26 mit dem elektrischen Kontakt 29b auf der Kugelkopfpassstückfläche in elektrische Verbindung kommt, was einen Kurzschluss verursachen würde.

Im Kraftfahrzeug 12 befindet sich eine Sende- und Empfängerschaltung 30 zum Senden und Empfangen von Signalen zu und von dem Kraftfahrzeuganhänger 10, welche von einer Sende- und Empfängerschaltung 32 im Kraftfahrzeuganhänger 10 empfangen und gesendet werden.

Die Sende- und Empfängerschaltung 32, eine elektronische Steuereinheit 36 zur Steuerung der von der Empfängerschaltung empfangenen Signale, und ein Schaltelement 38 sind in eine elektrische Schaltung 34 integriert. Als Schaltelement 38 wird im dargestellten Ausführungsbeispiel ein MOSFET eingesetzt, der zusammen mit der elektronischen Steuereinheit 32 gleichzeitig als eine elektrische Sicherung dient, indem die Steuereinheit 32 den am Drain des MOSFETs fließenden Strom erfasst. Übersteigt der gemessene Stromwert einen vorbestimmten Schwellenwert, regelt die Steuereinheit die Gatespannung des MOSFETSs so, dass der Stromfluss zwischen Drain und Source unterbrochen wird.

Die Steuersignale werden zwischen dem Kraftfahrzeug 12 und dem Anhänger 10 von der Sende-/ Empfängerschaltung 30 im Kraftfahrzeug 12 zu der Sende/Empfängerschaltung 32 im Kraftfahrzeuganhänger 10 und in umgekehrte Richtung drahtlos mittels elektromagnetischer Strahlung übertragen.

Im betriebsbereiten Zustand, d.h. wenn der Kraftfahrzeuganhänger 10 an das Kraftfahrzeug 12 gekuppelt ist und die Zündung des Kraftfahrzeugs eingeschaltet ist, fließt Strom vom Kraftfahrzeug 12 durch die Leitungsabschnitte 16a bzw. 16b in der Anhängerkupplung 14 zur elektrischen Schaltung 34 im Kraftfahrzeuganhänger und weiter zur Lampe 18. Ob die Lampe 18 leuchtet oder nicht, wird mit Hilfe von Steuersignalen gesteuert, die von der Sende/Empfangsschaltung 30 im Kraftfahrzeug 12 an die Sende/Empfangsschaltung 32 im Kraftfahrzeuganhänger 10 gesendet werden. Entsprechend dem von der Sende-/Empfängerschaltung empfangenen Steuersignal steuert die elektronische Steuereinheit 36 das Schaltelement 38, um die Lampe 18 ein- oder auszuschalten.

### Bezugszeichenliste

- 10: Kraftfahrzeuganhänger
- 12: Kraftfahrzeug
- 14: Anhängerkupplung
- 16a: elektrische Verbindung
- 16b: elektrische Verbindung
- 18: Stromverbraucher
- 20: Kugelkopfhaken
- 22: Kugelkopfpassstück
- 24: elektrische Isolierung
- 26: Kugelkopffläche
- 27a: elektrische Kontaktfläche
- 27b: elektrische Kontaktfläche
- 28: Kugelkopfpassstückfläche
- 29a: elektrische Kontaktfläche
- 29b: elektrische Kontaktfläche
- 30: Sende- und Empfangsschaltung im Kraftfahrzeug
- 32: Sende- und Empfangsschaltung im Kraftfahrzeuganhänger
- 34: elektrische Schaltung
- 36: elektronische Steuereinheit
- 38: Schaltelement

## Patentansprüche

1. Vorrichtung zur Verbindung eines Kraftfahrzeuganhängers (10) mit einem Kraftfahrzeug (12) umfassend eine Anhängerkupplung (14) sowie eine elektrische Verbindung (16a, 16b) zwischen Kraftfahrzeug (12) und Anhänger (10) zur Versorgung mindestens eines Stromverbrauchers (18) des Anhängers (10) mit Strom,
**dadurch gekennzeichnet,**
**dass** die elektrische Verbindung (16a, 16b) zwischen Kraftfahrzeug (12) und Anhänger (10) in die Anhängerkupplung (14) integriert ist und keine eigene elektrische Steckverbindung aufweist.

2. Vorrichtung nach Anspruch 1,
**dadurch gekennzeichnet,**
**dass** die Anhängerkupplung (14) einen Zughaken in Form eines Kugelkopfhakens (20) umfasst.

3. Vorrichtung nach Anspruch 1,
**dadurch gekennzeichnet,**
**dass** die Anhängerkupplung (14) ein Kugelkopfpassstück (22) umfasst.

4. Vorrichtung nach einem der Ansprüche 1 bis 3,
**dadurch gekennzeichnet,**
**dass** die elektrische Verbindung (16a, 16b) in der Anhängerkupplung (14) zwei voneinander isolierte, leitende Abschnitte (16a, 16b) umfasst.

5. Vorrichtung nach einem der Ansprüche 1 bis 4,
**dadurch gekennzeichnet,**
**dass** Mittel zur drahtlosen Übertragung von Steuersignalen für den mindestens einen Stromverbraucher (18) des Anhängers (10) vorgesehen sind.

6. Vorrichtung nach Anspruch 5,
**dadurch gekennzeichnet,**
**dass** im Kraftfahrzeug (12) eine Sendeschaltung und/oder im Anhänger eine Empfangsschaltung zur drahtlosen Übertragung von Steuersignalen für den mindestens einen Stromverbraucher (18) des Anhängers (10) vorgesehen sind/ist.

7. Vorrichtung nach Anspruch 5,
**dadurch gekennzeichnet,**
**dass** im Kraftfahrzeug (12) eine Sende-/Empfangsschaltung (30) und/ oder im Anhänger (10) eine Sende-/Empfangsschaltung (32) zur drahtlosen Übertragung von Steuersignalen für den mindestens einen Stromverbraucher (18) des Anhängers (10) vorgesehen sind/ist.

8. Vorrichtung nach einem der Ansprüche 5 bis 7,
**dadurch gekennzeichnet,**
**dass** eine elektronische Steuereinheit (36) in Abhängigkeit von Empfangsschaltungssignalen (32) im Anhänger (10) vorgesehen ist.

9. Vorrichtung nach einem der Ansprüche 1 bis 8,
**dadurch gekennzeichnet,**
**dass** eine elektronische Steuereinheit (36) zur Steuerung des mindestens einen Stromverbrauchers (18) vorgesehen ist, die die Funktion einer elektrischen Sicherung aufweist.
